(19) Europäisches Patentamt
European Patent Office
Office européen des brevets

(11) Publication number: **0 027 837**
**B1**

(12) # EUROPEAN PATENT SPECIFICATION

(45) Date of publication of patent specification: **08.08.84**

(51) Int. Cl.³: **C 07 C 103/76,**
A 01 N 37/48

(21) Application number: **79302341.7**

(22) Date of filing: **25.10.79**

(54) **Substituted diphenyl ethers having utility as herbicides.**

(43) Date of publication of application:
**06.05.81 Bulletin 81/18**

(45) Publication of the grant of the patent:
**08.08.84 Bulletin 84/32**

(84) Designated Contracting States:
**BE CH DE FR GB IT NL**

(56) References cited:
**DE - A - 2 753 900**

(73) Proprietor: **Rohm and Haas Company**
**Independence Mall West**
**Philadelphia, Pennsylvania 19105 (US)**

(72) Inventor: **Johnson, Wayne Orrin**
**346 Centennial Road**
**Warminster, Pennsylvania 18974 (US)**

(74) Representative: **Wood, Peter Worsley Spencer et al,**
**Rohm and Haas Company Patent Department**
**Chesterfield House Bloomsbury Way**
**London WC1A 2TP (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 027 837 B1

**Description**

This invention concerns novel diphenyl ethers which show activity as herbicides, herbicidal compositions which contain these compounds, and methods of controlling, i.e. combating, weeds with these herbicidal compositions.

Certain substituted diphenyl ethers have been shown to be effective weed control agents such as those described in West German Offenlegungsschrift 2753900. In this OLS, there are disclosed herbicidal substituted diphenyl ethers amongst which are those of the formula:

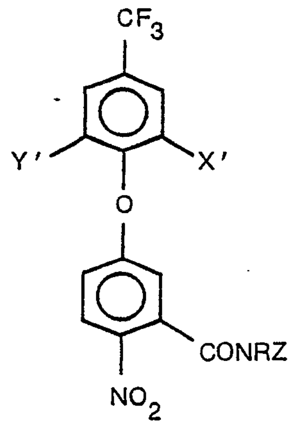

wherein X′ is hydrogen, halogen, trihalomethyl, ($C_1$—$C_4$)alkyl or cyano; Y′ is hydrogen, halogen or trihalomethyl; R is hydrogen or ($C_1$—$C_4$)alkyl; and Z is alkenyl, haloalkenyl, alkynyl, or haloalkynyl.

The herbicidal effectiveness of a given diphenyl ether cannot be predicted from an examination of the substituent groups attached to the phenyl rings in the ether, and often quite closely related compounds will have quite different weed control abilities. Various diphenyl ethers may be overlapping or complementary areas of activity or selectivity, and can thus be useful in combination to control a variety of weeds upon application of a single composition. Furthermore, the diphenyl ethers heretofore disclosed as herbicides are not completely effective. An ideal herbicide should give selective weed control, over the full growing season, with a single administration at low rates of application. It should be able to control all common weeds by killing them as the seed, the germinating seed, the seedling, and the gowing plant. At the same time, the herbicide should not be phytotoxic to the crops to which it is applied and should decompose or otherwise be dissipated so as not to poison the soil permanently. The known diphenyl ether herbicides fall short of these ideals, and it would thus be desirable to have new herbicides which show even more selective control of undesirable plants among desirable crop plants or which complement known herbicides in activity.

In accordance with the present invention, there is provided a class of novel diphenyl ethers having the formula:

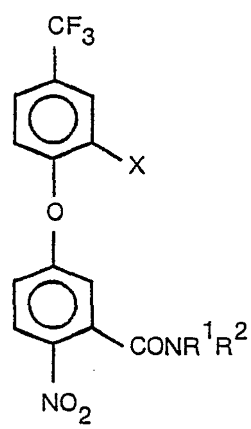

(I)

wherein X is hydrogen, halogen (preferably fluorine or chlorine), trifluoromethyl, ($C_1$—$C_4$)alkyl (preferably methyl) or cyano; $R^1$ is hydrogen or ($C_1$—$C_4$)alkyl; and $R^2$ is hydrogen or ($C_1$—$C_4$)alkyl.

When the X, $R^1$ or $R^2$ substituent is an alkyl group, it can have either a straight- or branched-chain configuration.

These novel compounds have been found to show unexpected activity as weed control agents. In a preferred embodiment of the invention, X is a halogen atom, most preferably a chlorine atom and Y is a hydrogen atom. Most preferably either $R^1$ or $R^2$ is a hydrogen atom, and the other a ($C_1$—$C_4$)alkyl group.

Examples of the compounds of the invention embraced by Formula I include:
2-Nitro-5-(2-chloro-4-trifluoromethylphenoxy)-N-methylbenzamide
2-Nitro-5-(2-chloro-4-trifluoromethylphenoxy)-N,N-diethylbenzamide
2-Nitro-5-(2-chloro-4-trifluoromethylphenoxy)-N-*t*-butylbenzamide
2-Nitro-5-(2-chloro-4-trifluoromethylphenoxy)-N-ethylbenzamide.
2-Nitro-5-(2-cyano-4-trifluoromethylphenoxy)benzamide

The novel diphenyl ethers of the invention are useful both as preemergence and postemergence herbicides. Preemergence herbicides are ordinarily used to treat the soil in which the desired crop is to be planted by application either before seeding, during seeding, or, as in most applications, after seeding and before the crop emerges. Postemergence herbicides are those which are applied after the plants have emerged and during their growth period. Compounds of the invention are particularly active against broadleaf weeds.

Among the crops on which the diphenyl ethers of the invention can be advantageously employed are, for example, soybeans, peanuts, cotton, corn, (i.e. maize), wheat, barley, rice and other cereal crops.

When used in transplanted rice crops, the ethers can be applied either preemergence or postemergence to the weeds — that is, they can be applied to the growth medium of the transplanted plants either before the weed plants have emerged or while they are in their early stages of growth. The ethers can be applied to the growth medium either before or after the rice has been transplanted to that medium.

The diphenyl ethers of the invention can be applied in any amount which will give the desired degree of weed control. A preferred rate of application of the herbicides of the invention is from about 0.112 to 13.45 kg/hectare, and most preferably about 0.28 to 4.48 kg/hectare (0.1 to 12 preferably 0.25 to 4 lb/acre) of the diphenyl ether.

Under some conditions, the diphenyl ethers of the invention may be advantageously incorporated into the soil or other growth medium prior to planting a crop. This incorporation can be carried out by any convenient means, including by simple mixing with the soil, by applying the diphenyl ether to the surface of the soil and then discing or dragging into the soil to the desired depth, or by employing a liquid carrier to accomplish the necessary penetration and impregnation.

A diphenyl ether of the invention can be applied to the growth medium or to plants to be treated either by itself or, as is generally done, as a component in a herbicidal composition or formulation which also comprises an agronomically-acceptable carrier. By agronomically-acceptable carrier is meant any substance which can be used to dissolve, disperse, or diffuse a herbicidal compound in the composition without impairing the effectiveness of the herbicidal compound and which by itself has no detrimental effect on the soil, equipment, crops, or agronomic environment. Mixtures of the diphenyl ethers of the invention may be used in any of these herbicidal formulations. The herbicidal compositions of the invention can be either solid or liquid formulations or solutions. For example, the diphenyl ethers can be formulated as wettable powders, emulsifiable concentrates, dusts, granular formulations, aerosols, or flowable emulsion concentrates. In such formulations, the compounds are extended with a liquid or solid carrier and, when desired, suitable surfactants are incorporated. Guidance as to formulations and the mode of application of the diphenyl ethers may be derived from OLS 2,753,900 cited above. The diphenyl ethers of the invention can be used in conjunction with other herbicides such as those listed in OLS 2,753,900.

The ethers of the invention can be prepared by reacting an acid halide, preferably an acid chloride of a diphenyl ether of the formula:

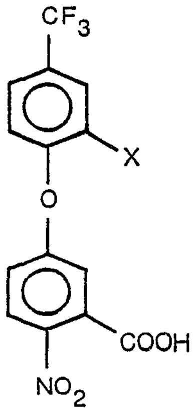

(II)

wherein X is as defined above, with an excess of an amine of the formula

$$HNR^1R^2 \qquad (III)$$

wherein $R^1$ and $R^2$ are as defined above. This reaction is generally carried out in a solvent in which the

acid chloride is soluble, such as diethyl ether, a chlorinated hydrocarbon or an aromatic hydrocarbon, at a temperature of 0 to 100°C, preferably at 0 to 40°C. The amination reaction can also be carried out under Schotten-Bauman conditions, where one equivalent of an amine of Formula III is first added to a mixture of an organic solvent, such as diethyl ether, and an aqueous solution of a strong inorganic base, such as sodium hydroxide, followed by the slow addition of an organic solution of the acid chloride, for example in toluene, to the agitated two-phase system. This reaction is generally carried out at a temperature of 0 to 100°C, preferably 10 to 40°C.

Compounds of the invention can also be prepared by reacting an ester of a diphenyl ether of Formula II with an amine of Formula III, using an acid catalyst, such as *p*-toluenesulfonic acid, hydrochloric acid or sulfuric acid, in a suitable inert solvent, such as tetrahydrofuran, glyme, toluene or xylene, at a temperature of 20° to the reflux temperature of the solvent. In another route to the compounds of the invention, an ammonium salt of a diphenyl ether of Formula II, in which the cation has the formula:

$$^{\oplus}NH_2R^1R^2 \qquad \text{(IIIa)}$$

wherein $R^1$ and $R^2$ are as defined above, is heated at a temperature of 100° to 200° in a high-boiling inert solvent, such as toluene, xylene or diglyme, to produce the amide directly.

The diphenyl ether precursors can be prepared by reacting a suitably substituted phenol, or the potassium or sodium salt of the phenol, with a suitably substituted halobenzene, such as a chloro- or fluorobenzene in the presence of an alkaline agent. Such precursors and their preparation are described in U.S. Patent Nos. 3,928,416 and 4,031,131.

Another route to the compounds of the invention involves the nitration of a diphenyl ether of the formula:

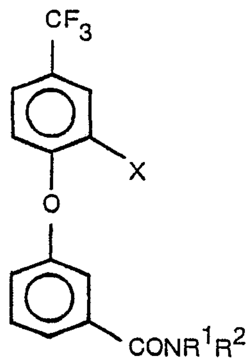

(IV)

wherein X, $R^1$ and $R^2$ are as defined above, using typical nitrating agents such as potassium nitrate in sulfuric acid, acetyl nitrate, mixed sulfuric acid/nitric acid or nitrosonium tetrafluoroborate. The nitration reaction is generally carried out at 20 to 100°C, preferably 0 to 5°C, optionally in the presence of an inert organic solvent, such as methylene chloride or other chlorinated hydrocarbon.

The compounds of the invention can also be prepared by condensing a phenol of the formula

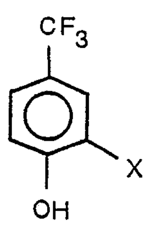

(V)

wherein X and Y are as defined above with a substituted halobenzene of the formula:

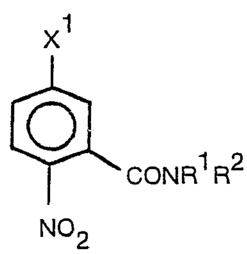

(VI)

wherein $X^1$ is a halogen atom, preferably a fluorine atom, and $R^1$ and $R^2$ are as defined above. This reaction is generally carried out at a temperature of 0 to 250°C, preferably 75 to 200°C, optionally in the

presence of an appropriate solvent, such as sulfolane, dimethylsulfoxide, dimethylformamide, hexamethylphosphorustriamide, or other inert polar organic solvent.

The following Example will illustrate the preparation of compounds according to the invention. In Table I, typical diphenyl ethers of the invention are listed together with their elemental analyses. In Table I, "—" indicates "not determined".

Example 1

Experimental:
Preparation of 2-nitro-5-(2-chloro-4-trifluoromethylphenoxy)-N-methylbenzamide (Compound No. 2, Table I)

A solution of 2-nitro-5-(2-chloro-4-trifluoromethylphenoxy)benzoyl chloride (10 g, 0.026 mole) and an excess of methylamine was stirred at room temperature in toluene for five hours. Amine hydrochloride was filtered off and the filtrate stripped to yield 2-nitro-5-(2-chloro-4-trifluoromethylphenoxy)benzoyl chloride (8 g) m.p. 118—120°C.

TABLE I
Diphenyl Ethers — Physical Data

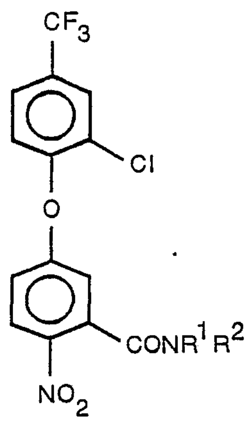

| Compound No. | $R^1$ | $R^2$ | m.p.(°C) | | %C | %H | %N | %Cl | %F |
|---|---|---|---|---|---|---|---|---|---|
| 1 | H | H | m.p. 139—143 | Found | 45.77 | 2.30 | 7.91 | — | — |
| | | | | reqs | 46.62 | 2.23 | 7.76 | — | — |
| 2 | Me | H | m.p. 118—120 | Found | 47.41 | 2.87 | 6.96 | 9.32 | 14.45 |
| | | | | reqs | 48.08 | 2.69 | 7.49 | 9.46 | 15.21 |
| 3 | Et | H | m.p. 120—122 | Found | 49.49 | 3.14 | 7.02 | 9.17 | 14.51 |
| | | | | reqs | 49.44 | 3.11 | 7.21 | 9.12 | 14.66 |
| 4 | Me | Me | oil | Found | 48.13 | 3.49 | 6.87 | 11.64 | 14.75 |
| | | | | reqs | 49.44 | 3.11 | 7.21 | 9.12 | 14.66 |
| 5 | Et | Et | m.p. 75—90 | Found | 50.26 | 3.84 | 6.04 | 9.94 | 13.90 |
| | | | | reqs | 51.80 | 3.88 | 6.73 | 8.55 | 13.68 |
| 6 | i-Pr | H | m.p. 135—137 | Found | 55.19 | 4.47 | 7.49 | 9.24 | 15.07 |
| | | | | reqs | 54.77 | 4.32 | 7.51 | 9.51 | 15.28 |

The following Example 2 shows the herbicidal properties of diphenyl ethers of the invention.

Example 2

Using the procedure described below, diphenyl ethers were evaluated for control of various plant species.

The following test procedure was employed. Seeds of selected crops and weeds were planted in soil in trays. For preemergence tests, the trays were treated with the test compound immediately after the planting. For postemergence tests, the seeds were allowed to germinate, and after two weeks the trays were treated with the test compound immediately after the planting. The compound to be evaluated was dissolved in acetone, diluted with water, and sprayed over the trays using a carrier volume equivalent to 468 l/ha (i.e. 50 U.S. gallons per acre) at the rate of application of 2.24 or 4.48

kg/ha. About two weeks after the application of the test compound, the state of growth of the plants was observed and the phytotoxic effect of the compound evaluated. The results of typical tests are summarised in Table II, which gives the average percent control achieved by the test compounds with 0 representing no control and 100 complete kill of the plant.

The following species were tested:

Monocots

| | |
|---|---|
| barnyardgrass | *Echinochloa crusgalli* |
| downybrome | *Bromus tectorum* |
| green foxtail | *Setaria vividis* |
| johnsongrass | *Sorghum halepense* |
| yellow nutsedge | *Cyperus esculentus* |
| wild oats | *Avena fatua* |

Dicots

| | |
|---|---|
| cocklebur | *Xanthium pensylvanicum* |
| marigold | *Tagetes patula* |
| tomato | *Lycopersicum esculentum* |
| morningglory | *Ipomoea sp* |
| nightshade | *Solanum nigrum* |
| velvetleaf | *Abuliton theophrasti* |
| safflower | *Carthamus tinctorius* |

TABLE II

Greenhouse Weed Control Data

| Compound No. | | Kg/ha | Monocot: Barnyardgrass | Downybrome | Green foxtail | Johnsongrass (seedlings) | Yellow nutsedge | Wild oats | Dicot: Cocklebur | Marigold | Tomato | Morningglory | Nightshade | Velvetleaf | Safflower |
|---|---|---|---|---|---|---|---|---|---|---|---|---|---|---|---|
| 1 | Pre | 2.24* | 99 | 60 | 100 | 100 | 99 | 30 | 70 | — | — | 70 | 100 | 60 | 0 |
| | Post | 2.24 | 70 | 50 | 70 | 90 | 40 | 40 | 100 | — | — | 95 | 100 | 100 | 80 |
| 2 | Pre | 2.24 | 99 | 40 | 100 | 99 | 100 | 95 | 80 | 100 | 100 | 90 | — | 99 | — |
| | Pre | 4.48 | 100 | 95 | 100 | 100 | 100 | 95 | 80 | 100 | 100 | 80 | — | 95 | — |
| | Post | 2.24 | 90 | 30 | 100 | 70 | 100 | 30 | 70 | 99 | 95 | 60 | — | 100 | — |
| | Post | 4.48 | 90 | 20 | 95 | 30 | 50 | 40 | 70 | 70 | 40 | 70 | — | 95 | — |
| 3 | Pre | 2.24 | 99 | 20 | 100 | 99 | 80 | 99 | 0 | 100 | 100 | 80 | — | 100 | — |
| | Pre | 4.48 | 100 | 40 | 100 | 99 | 99 | 95 | 60 | 100 | 100 | 95 | — | 100 | — |
| | Post | 2.24 | 70 | 20 | 99 | 40 | 60 | 20 | 60 | 95 | 90 | 80 | — | 90 | — |
| | Post | 4.48 | 80 | 70 | 100 | 60 | 99 | 50 | 60 | 95 | 60 | 60 | — | 80 | — |
| 4 | Pre | 2.24 | 95 | 50 | 99 | 50 | 20 | 30 | 0 | 100 | 70 | 10 | — | 80 | — |
| | Pre | 4.48 | 99 | 70 | 100 | 90 | 95 | 95 | 0 | 100 | 100 | 40 | — | 100 | — |
| | Post | 2.24 | 40 | 0 | 80 | 30 | 80 | 20 | 90 | 99 | 100 | 90 | — | 100 | — |
| | Post | 4.48 | 50 | 20 | 95 | 20 | 60 | 20 | 80 | 99 | 90 | 60 | — | 100 | — |
| 5 | Pre | 4.48 | 40 | 0 | 80 | 50 | 0 | 0 | 0 | — | — | 0 | 0 | 0 | 0 |
| | Post | 4.48 | 0 | 0 | 0 | 0 | 0 | 0 | 40 | — | — | 10 | 30 | 30 | 30 |

* equivalent to 2 lbs/acre

— indicates not tested

Example 3

The following example shows the selectivity of the diphenyl ethers of the invention towards several common crops. Using a procedure similar to Example 2, the following crops were planted and treated: corn (CN — otherwise termed maize), cotton (COT), rape (RA), rice (RI), sugarbeet (SB), soybeans (SOY) and wheat (WHT). The result of typical tests are summarised in Table III, which gives the average percent injury caused by the test compound with 0 representing no injury and 100 complete kill of the plant.

TABLE III

| Compound No. | kg/ha | Preemergence CN | COT | RA | RI | SB | SOY | WHT | Postemergence CN | COT | RA | RI | SB | SOY | WHT |
|---|---|---|---|---|---|---|---|---|---|---|---|---|---|---|---|
| 1 | 2.24 | 80 | 0 | 100 | 30 | 100 | 50 | 15 | 5 | 80 | 80 | 20 | 80 | 40 | 5 |
| | 1.12 | 15 | 0 | 100 | 20 | 100 | 20 | 10 | 5 | 60 | 90 | 10 | 80 | 20 | 10 |
| | 0.56 | 20 | 0 | 100 | 15 | 100 | 0 | 10 | 5 | 60 | 80 | 20 | 80 | 20 | 5 |
| 2 | 2.24 | 30 | 0 | 100 | 10 | 90 | 0 | 20 | 5 | 30 | 80 | 15 | 50 | 20 | 5 |
| | 1.12 | 10 | 0 | 100 | 20 | 100 | 0 | 10 | 0 | 30 | 80 | 15 | 50 | 10 | 0 |
| | 0.56 | 0 | 0 | 100 | 10 | 95 | 0 | 10 | 0 | 40 | 70 | 10 | 45 | 10 | 5 |
| 4 | 2.24 | 0 | 0 | 100 | 10 | 95 | 0 | 10 | 5 | 35 | 70 | 10 | 65 | 10 | 5 |
| | 1.12 | 10 | 0 | 100 | 10 | 90 | 0 | 0 | 0 | 25 | 70 | 5 | 70 | 10 | 5 |
| | 0.56 | 10 | 0 | 95 | 10 | 70 | 0 | 0 | 0 | 25 | 70 | 5 | 50 | 15 | 5 |
| 5 | 2.24 | 0 | 0 | 100 | 0 | 100 | 0 | 5 | 15 | 30 | 80 | 5 | 60 | 10 | 10 |
| | 1.12 | 0 | 0 | 95 | 0 | 95 | 0 | 5 | 15 | 30 | 80 | 5 | 50 | 15 | 15 |
| | 0.56 | 0 | 0 | 80 | 0 | 90 | 0 | 10 | 20 | 20 | 70 | 0 | 55 | 10 | 5 |

## Claims

1. 2-Nitro-5-(4-trifluoromethylphenoxy)-N-substituted benzamides optionally containing additional ring substituents characterised in that the benzamides are of the formula:

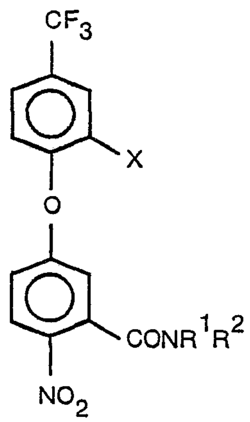

wherein

X is hydrogen, halogen, $(C_2—C_4)$alkyl, cyano or trifluoromethyl;

$R^1$ is hydrogen or $(C_1—C_4)$alkyl; and

$R^2$ is hydrogen or $(C_1—C_4)$alkyl.

2. A compound as claimed in Claim 1, wherein X is chlorine.

3. A compound as claimed in Claim 2, wherein one of $R^1$ and $R^2$ is hydrogen.

4. A compound as claimed in Claim 2, wherein $R^1$ is hydrogen and $R^2$ is ethyl.

5. A compound as claimed in Claim 2, wherein $R^1$ is hydrogen and $R^2$ is methyl.

6. A herbicidal composition which comprises a compound as claimed in any one of Claims 1 to 5, an agronomically acceptable carrier and, optionally, a surfactant.

7. A method of combating weeds which comprises applying to weed seedlings or to the surface of a growth medium prior to the emergence of the weeds from the growth medium prior to the emergence of the weeds from the growth medium a compound as claimed in any one of Claims 1 to 5, the compound being applied in an amount effective to combat the growth of the weeds.

8. A method for selectively combating weeds in an agronomic crop area which comprises applying to the area in which the crop is growing or is to be grown a compound as claimed in any one of Claims 1 to 5 in an amount sufficient to control the growth of the weeds without significantly affecting the growth of the agronomic crop.

9. A method according to Claim 8, wherein the crop is maize, cotton, rice, soybeans or wheat.

## Revendications

1. 2-nitro-5-(4-trifluorométhylphénoxy)-benzamides N substitués contenant facultativement des substituants additionnels dans les noyaux, caractérisés en ce que les benzamides sont de formule

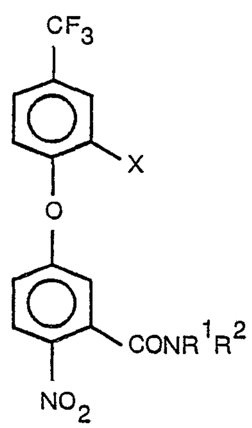

dans laquelle X est hydrogène, halogène, $(C_1—C_4)$ alkyle, cyano ou trifluorométhyle;

$R^1$ est hydrogène ou $(C_1—C_4)$ alkyle; et

$R^2$ est hydrogène ou $(C_1—C_4$ alkyle.

2. Un composé selon la revendication 1, dans lequel X est chlore.

3. Un composé selon la revendication 2, dans lequel l'un de $R^1$ et $R^2$ est hydrogène.

4. Un composé selon la revendication 2, dans lequel $R^1$ est hydrogène et $R^2$ est éthyle.

5. Un composé selon la revendicatoin 2, dans lequel $R^1$ est hydrogène et $R^2$ est méthyle.

6. Une composition herbicide qui comprend un composé selon l'une quelconque des revendications 1 à 5, un véhicule acceptable d'un point de vue agronomique et, facultativement, un agent tensio-actif.

7. Une méthode pour combattre des mauvaises herbes qui comprend l'application, à de jeunes plants de mauvaises herbes ou à la surface d'un milieu de croissance avant l'émergence des mauvaises herbes du milieu de croissance, d'un composé selon l'une quelconque des revendications 1 à 5, le composé étant appliqué en une quantité efficace pour combatre la croissance des mauvaises herbes.

8. Une méthode pour combattre sélectivement des mauvaises herbes dans une zone de culture agronomique qui comprend l'application, à la zone dans laquelle la culture croît ou doit croître, d'un composé selon l'une quelconque des revendications 1 à 5 en une quantité suffisante pour contrôler la croissance des mauvaises herbes sans affecter d'une manière significative la croissance de la culture agronomique.

9. Une méthode selon la revendication 8, dans laquelle la culture est de mais, du coton, du riz, du soya ou du blé.

**Patentansprüche**

1. 2-Nitro-5-(4-trifluoromethylphenoxy)-N-substituierte Benzamide, die gegebenenfalls weitere Ringsubstituenten enthalten, dadurch gekennzeichnet, daß die Benzamide der Formel

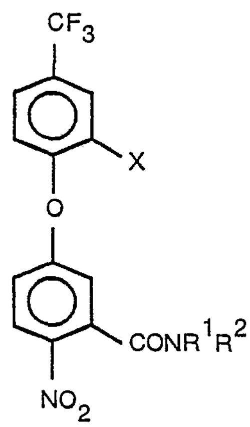

entsprechen, worin X für Wasserstoff, Halogen, ($C_1$—$C_4$)-Alkyl, Cyano oder Trifluormethyl steht, $R^1$ Wasserstoff oder ($C_1$—$C_4$)-Alkyl ist und $R^2$ Wasserstoff oder ($C_1$—$C_4$)-Alkyl bedeutet.

2. Verbindung nach Anspruch 1, dadurch gekennzeichnet, daß X für Chlor steht.

3. Verbindung nach Anspruch 2, dadurch gekennzeichnet, daß einer der Substituenten $R^1$ und $R^2$ Wasserstoff bedeutet.

4. Verbindung nach Anspruch 2, dadurch gekennzeichnet, daß $R^1$ für Wasserstoff steht und $R^2$ Ethyl bedeutet.

5. Verbindung nach Anspruch 2, dadurch gekennzeichnet, daß $R^1$ für Wasserstoff steht und $R^2$ Methyl ist.

6. Herbizides Mittel, dadurch gekennzeichnet, daß es eine Verbindung nach einem der Ansprüche 1 bis 5, einen für landwirtschaftliche Zwecke verträglichen Träger und gegebenenfalls ein grenzflächenaktives Mittel enthält.

7. Verfahren zur Bekämpfung von Unkräutern, dadurch gekennzeichnet, daß auf die Unkrautsämlinge oder auf die Oberfläche eines Wachstumsmediums von dem Auflaufen der Unkräuter aus dem Wachstumsmedium eine Verbindung gemäß einem der Ansprüche 1 bis 5 aufgebracht wird, wobei die Verbindung in einer Menge aufgebracht wird, welche das Wachstum der Unkräuter zu bekämpfen vermag.

8. Verfahren zum selektiven Bekämpfen von Unkräutern auf einer Fläche, auf der landwirtschaftliche Nutzpflanzen wachsen, dadurch gekennzeichnet, daß es auf die Fläche, auf welcher die Nutzpflanze, wächst oder wachsen soll, eine Verbindung nach einem der Ansprüche 1 bis 5 in einer Menge aufgebracht wird, die dazu ausreicht, das Wachstum der Unkräuter zu bekämpfen, ohne daß dabei in signifikanter Weise das Wachstum der landwirtschaftlichen Nutzpflanze beeinflußt wird.

9. Verfahren nach Anspruch 8, dadurch gekennzeichnet, daß die Nutzpflanze aus Mais, Baumwolle, Reis, Sojabohnen oder Weizen besteht.